# EUROPEAN PATENT SPECIFICATION

(11) **EP 3 137 546 B1**
(45) Date of publication and mention of the grant of the patent: **04.07.2018**
(21) Application number: 15717295.8
(22) Date of filing: 18.03.2015
(51) Int. Cl.: C08L 67/02

(54) **FLAME-RETARDANT POLYESTER COMPOSITION AND ARTICLE**
FLAMMHEMMENDE POLYESTERZUSAMMENSETZUNG UND ARTIKEL
COMPOSITION IGNIFUGEANTE DE POLYESTER AINSI QUE ARTICLE

(30) Priority: 23.04.2014 US 201461983043 P
(43) Date of publication of application: 08.03.2017
(73) Proprietor: SABIC Global Technologies B.V., 4612 PX Bergen op Zoom (NL)
(72) Inventor: DING, Tianhua, Mount Vernon, Indiana 47620 (US); XI, Ying, Shanghai 201319 (CN); CHEN, Lin, Shanghai 201319 (CN); SHI, Hongtao, Shanghai 201319 (CN); SHEN, Dake, Shanghai 201319 (CN)
(74) Representative: Balder IP Law, S.L.
(86) International application number: PCT/US2015/021142
(87) International publication number: WO 2015/163996

(56) References cited:
- WO-A1-2012/003180
- WO-A1-2012/003182
- WO-A1-2012/055532
- US-A1- 2009 124 733

## Description

### BACKGROUND OF THE INVENTION

Semi-crystalline thermoplastic polyester compositions exhibit excellent chemical resistance, melt flow, and electrical properties. The polyester compositions have therefore been used to fabricate parts for electrical and electronic goods, such as sockets for light emitting diodes, cooling fans, and electrical connectors. However, in applications that demand halogen-free compositions, such as automotive applications, thermoplastic compositions have sometimes been less favored than polyamide compositions, even though the parts formed from polyester compositions absorb less water and exhibit better dimensional and electrical stability than corresponding parts formed from polyamides. One reason that polyester compositions can be less preferred than polyamide compositions is that that the polyester compositions can exhibit inferior ductility, especially when halogen-free flame retardants such as metal dialkylphosphinates, are employed. For example, U.S. Patent No 7,829,614 B2 of Ding et al. describes a glass fiber reinforced poly(butylene terephthalate) composition with a flame retardant that includes aluminum tris(diethylphosphinate) and a melamine-based flame retardant. The composition exhibited the desired V-0 rating in the UL 94 Vertical Burn Test, but was deficient in ductility. Specifically, the composition exhibited a notched Izod impact strength of about 60 joules/meter at room temperature, whereas glass fiber reinforced polyamide compositions typically exhibit notched Izod impact strengths of 90 joules/meter, or higher. The Ding patent further teaches that the addition of a charring polymer, such as polyetherimide, can further improve flame retardancy and mechanical strength. However, the addition of polyetherimide can adversely affect the electrical property comparative tracking index. There remains a need for polyester compositions with improved impact strength while substantially maintaining desirable melt flow, electrical, and flame retardancy properties.

### BRIEF SUMMARY OF EMBODIMENTS OF THE INVENTION

One embodiment is a composition, comprising: 35 to 76 weight percent of a poly(alkylene terephthalate); 2 to 6 weight percent of an impact modifier comprising a polyolefin elastomer comprising an ethylene/1-octene copolymer, and, optionally, a thermoplastic polyester elastomer, provided that the amount of polyolefin elastomer does not exceed 5 weight percent; 10 to 50 weight percent glass fibers; and 14 to 25 weight percent of a flame retardant comprising 5 to 15 weight percent of a metal dialkylphosphinate, 2 to 8 weight percent of a melamine-based flame retardant, and 1 to 6 weight percent of a flame retardant synergist comprising an organophosphine oxide, an oligomeric or polymeric bis(phenoxy)phosphazene, an organophosphate ester, or a combination thereof; wherein all weight percent values are based on the total weight of the composition.

Another embodiment is an article comprising a composition, comprising: 35 to 76 weight percent of a poly(alkylene terephthalate); 2 to 6 weight percent of an impact modifier comprising a polyolefin elastomer comprising an ethylene/1-octene copolymer, and, optionally, a thermoplastic polyester elastomer, provided that the amount of polyolefin elastomer does not exceed 5 weight percent; 10 to 50 weight percent glass fibers; and 14 to 25 weight percent of a flame retardant comprising 5 to 15 weight percent of a metal dialkylphosphinate, 2 to 8 weight percent of a melamine-based flame retardant, and 1 to 6 weight percent of a flame retardant synergist comprising an organophosphine oxide, an oligomeric or polymeric bis(phenoxy)phosphazene, an organophosphate ester, or a combination thereof; wherein all weight percent values are based on the total weight of the composition.

These and other embodiments are described in detail below.

### DETAILED DESCRIPTION OF THE INVENTION

The present inventors have determined that a polyester composition exhibits improved impact strength while substantially maintaining desirable melt flow, electrical, and flame retardancy properties when the composition includes specific amounts of a poly(alkylene terephthalate), an impact modifier that includes a polyolefin elastomer comprising an ethylene/1-octene copolymer, and, optionally, a thermoplastic polyester elastomer, glass fibers; and a flame retardant. In particular, the composition comprises a poly(alkylene terephthalate); 2 to 6 weight percent of an impact modifier comprising a polyolefin elastomer comprising an ethylene/1-octene copolymer, and, optionally, a thermoplastic polyester elastomer, provided that the amount of polyolefin elastomer does not exceed 5 weight percent; 10 to 50 weight percent glass fibers; and 14 to 25 weight percent of a flame retardant comprising 5 to 15 weight percent of a metal dialkylphosphinate, 2 to 8 weight percent of a melamine-based flame retardant, and 1 to 6 weight percent of a flame retardant synergist comprising an organophosphine oxide, an oligomeric or polymeric bis(phenoxy)phosphazene, an organophosphate ester, or a combination thereof; wherein all weight percent values are based on the total weight of the composition.

The composition includes a poly(alkylene terephthalate). The alkylene group of the poly(alkylene terephthalate) can comprise 2 to 18 carbon atoms. Examples of alkylene groups are ethylene, 1,3-propylene, 1,4-butylene, 1,5-pentylene, 1,6-hexylene, 1,4-cyclohexylene, 1,4-cyclohexanedimethylene, and combinations thereof. In some embodiments, the alkylene group comprises ethylene, 1,4-butylene, or a combination thereof, and the poly(alkylene terephthalate comprises poly(ethylene terephthalate), poly(butylene terephthalate), or a combination thereof, respectively. In some embodiments, the alkylene group comprises 1,4-butylene and the poly(alkylene terephthalate) comprises poly(butylene terephthalate).

The poly(alkylene terephthalate) can also be a copolyester derived from terephthalic acid (or a combination of terephthalic acid and isophthalic acid) and a mixture comprising a linear C₂-C₆ aliphatic diol, such as ethylene glycol and/or 1,4-butylene glycol), and a C₆-C₁₂ cycloaliphatic diol, such as 1,4-cyclohexane diol, 1,4-cyclohexanedimethanol, dimethanol decalin, dimethanol bicyclooctane, 1,10-decane diol, or a combination thereof. The ester units comprising the two or more types of diols can be present in the polymer chain as individual units or as blocks of the same type of units. Specific esters of this type include poly(1,4-cyclohexylene dimethylene co-ethylene terephthalate) (PCTG) wherein greater than 50 mole percent of the ester groups are derived from 1,4-cyclohexanedimethanol; and poly(ethylene-co-1,4-cyclohexylenedimethylene terephthalate) wherein greater than 50 mole percent of the ester groups are derived from ethylene (PETG).

It will be understood that the poly(alkylene terephthalate) can include small amounts (e.g., up to 10 weight percent, specifically up to 5 weight percent) of residues of monomers other than alkylene diols and terephthalic acid. For example, the poly(alkylene terephthalate) can include the residue of isophthalic acid. As another example, the poly(alkylene terephthalate) can comprises units derived from an aliphatic acid, such as succinic acid, glutaric acid, adipic acid, pimelic acid, 1,4-cyclohexanedicarboxylic acid, and combinations thereof.

In some embodiments, the poly(alkylene terephthalate) is poly(1,4-butylene terephthalate) or "PBT" resin that is obtained by polymerizing a glycol component comprising at least 70 mole percent, specifically at least 80 mole percent, of tetramethylene glycol (1,4-butanediol), and an acid component comprising at least 70 mole percent, specifically at least 80 mole percent, terephthalic acid or polyester-forming derivatives therefore. Commercial examples of PBT include those available under the trade names VALOX™ 315 and VALOX™ 195, manufactured by SABIC Innovative Plastics.

In some embodiments, the poly(alkylene terephthalate) has an intrinsic viscosity of 0.4 to 2.0 deciliter/gram (dl/g), as measured in a 60:40 (weight/weight) phenol/tetrachloroethane mixture at 23 °C. In some embodiments, the poly(alkylene terephthalate) has an intrinsic viscosity of 0.5 to 1.5 dl/g, specifically 0.6 to 1.2 dl/g.

In some embodiments, the poly(alkylene terephthalate) has a weight average molecular weight of 10,000 to 200,000 atomic mass units, specifically 50,000 to 150,000 atomic mass units, as measured by gel permeation chromatography (GPC) using polystyrene standards. If a poly(alkylene terephthalate) having a weight average molecular weight less than 10,000 atomic mass units is used, the mechanical properties of the articles molded from the composition can be unsatisfactory. On the other hand, if a poly(alkylene terephthalate) having a weight average molecular weight greater than 200,000 atomic mass units is used, the moldability can be insufficient. The poly(alkylene terephthalate) can also comprise a mixture of two or more poly(alkylene terephthalate)s having different intrinsic viscosities and/or weight average molecular weights.

In some embodiments, the poly(alkylene terephthalate) component comprises a modified poly(butylene terephthalate), that is, a PBT derived in part from poly(ethylene terephthalate) (PET), for example recycled PET from used soft drink bottles. The PET-derived PBT polyester (referred to herein for convenience as a "modified PB%") can be derived from a poly(ethylene terephthalate) component such as poly(ethylene terephthalate), a poly(ethylene terephthalate) copolymer, or a combination thereof. The modified PBT can further be derived from biomass-derived 1,4-butanediol, e.g., corn derived 1,4-butanediol or a 1,4-butanediol derived from a cellulosic material. Unlike conventional molding compositions containing virgin PBT (PBT that is derived from 1,4-butanediol and terephthalic acid monomers), the modified PBT contains units derived from ethylene glycol and isophthalic acid. Use of modified PBT can provide a valuable way to effectively use underutilized scrap PET (from post-consumer or post-industrial streams) in PBT thermoplastic molding compositions, thereby conserving non-renewable resources and reducing the formation of greenhouse gases, e.g., carbon dioxide.

The modified PBT can have at least one residue derived from the poly(ethylene terephthalate) component. Such residue can include residue derived from one or more of ethylene glycol groups, diethylene glycol groups, isophthalic acid groups, antimony-containing compounds, germanium-containing compounds, titanium-containing compounds, cobalt-containing compounds, tin-containing compounds, aluminum, aluminum salts, 1,3-cyclohexane dimethanol isomers, 1,4-cyclohexane dimethanol isomers, the cis isomer of 1,3-cyclohexane dimethanol, the cis isomer of 1,4-cyclohexane dimethanol, the trans isomer of 1,3-cyclohexane dimethanol, the trans isomer of 1,4-cyclohexane dimethanol, alkali salts, alkaline earth metal salts, including calcium, magnesium, sodium and potassium salts, phosphorous-containing compounds and anions, sulfur-containing compounds and anions, naphthalene dicarboxylic acids, 1,3-propanediol groups, and combinations thereof.

Depending on factors such as the type and relative amounts of poly(ethylene terephthalate) and poly(ethylene terephthalate) copolymers, the residue can include various combinations. For example, the residue can include mixtures of units derived from ethylene glycol groups and diethylene glycol groups. The residue can also include mixtures of units derived from ethylene glycol groups, diethylene glycol groups, and isophthalic acid groups. The residue derived from poly(ethylene terephthalate) can include the cis isomer of 1,3-cyclohexane dimethanol groups, the cis isomer of 1,4-cyclohexane dimethanol groups, the trans isomer of 1,3-cyclohexane dimethanol groups, the trans isomer of 1,4-cyclohexane dimethanol groups, and combinations thereof. The residue can also include a mixture of units derived from ethylene glycol groups, diethylene glycol groups, isophthalic acid groups, cis isomer of cyclohexane dimethanol groups, trans isomer of cyclohexane dimethanol groups, and combinations thereof. The residue derived from poly(ethylene terephthalate) can also include mixtures of units derived from ethylene glycol groups, diethylene glycol groups, and cobalt-containing compounds. Such cobalt-containing compound mixtures can also contain isophthalic acid groups.

The amount of the ethylene glycol groups, diethylene glycol groups, and isophthalic groups in the polymeric backbone of the modified PBT component can vary. The modified PBT ordinarily contain units derived from isophthalic acid in an amount that is at least 0.1 mole percent and can range from 0.1 to 10 mole percent. The modified PBT component can also contain units derived from ethylene glycol in an amount that is at least 0.1 mole percent and can range from 0.1 to 10 mole percent. The modified PBT component can also contain units derived from diethylene glycol in an amount of 0.1 to 10 mole percent. In some embodiments, the amount of units derived from butanediol is 95 to 99.8 mole percent. In some embodiments, the amount of units derived from terephthalic acid is 90 to 99.9 mole percent. Unless otherwise specified, all molar amounts of units derived from isophthalic acid and/or terephthalic acid are based on the total moles of units in the composition derived from diacids and/or diesters. Unless otherwise specified, all molar amounts of units derived from 1,4-butanediol, ethylene glycol, and diethylene glycol are based on the total moles of units in the composition derived from diol.

The total amount of the poly(ethylene terephthalate) component residue in the modified PBT can vary in amounts from 1.8 to 2.5 weight percent, or from 0.5 to 2 weight percent, or from 1 to 4 weight percent, based on the total weight of the modified PBT. When it is desirable to make a poly(butylene terephthalate) copolymer having a melting temperature Tₘ that is at least 200°C, the total amount of diethylene glycol, ethylene glycol, and isophthalic acid groups should be within a certain range. As such, the total amount of the diethylene glycol, ethylene glycol, and isophthalic acid groups in the modified poly(butylene terephthalate) component can be more than 0 and less than or equal to 23 equivalents, relative to the total of 100 equivalents of diol and 100 equivalents of diacid groups in the modified PBT. The total amount of inorganic residues derived from the poly(ethylene terephthalate) can be present at more than 0 parts per million by weight (ppm) and up to 1000 ppm. Examples of such inorganic residues include antimony-containing compounds, germanium-containing compounds, titanium-containing compounds, cobalt-containing compounds, tin containing compounds, aluminum, aluminum salts, alkaline earth metal salts (including calcium and magnesium salts), alkali salts (including sodium and potassium salts), phosphorous-containing compounds and anions, sulfur-containing compounds and anions, and combinations thereof. The amounts of inorganic residues can be from 250 to 1000 ppm, more specifically from 500 to 1000 ppm.

Commercial examples of a modified PBT include those available under the trade name VALOX™ iQ Resin, manufactured by SABIC Innovative Plastics Company. The modified PBT can be derived from the poly(ethylene terephthalate) component by any method that involves depolymerization of the poly(ethylene terephthalate) component and polymerization of the depolymerized poly(ethylene terephthalate) component with 1,4-butanediol to provide the modified PBT. For example, the modified poly(butylene terephthalate) component can be made by a process that involves depolymerizing a poly(ethylene terephthalate) and/or a poly(ethylene terephthalate) copolymer, with a 1,4-butanediol component at a temperature from 180°C to 230°C, under agitation, at a pressure that is at least atmospheric pressure in the presence of a catalyst component, at an elevated temperature, under an inert atmosphere, to produce a molten mixture containing an oligomer containing ethylene terephthalate moieties, an oligomer containing ethylene isophthalate moieties, an oligomer containing diethylene terephthalate moieties, an oligomer containing diethylene isophthalate moieties, an oligomer containing butylene terephthalate moieties, an oligomer containing butylene isophthalate moieties, a covalently bonded oligomeric moiety containing at least two of the foregoing moieties, 1,4-butanediol, ethylene glycol, or a combination thereof; and agitating the molten mixture at sub-atmospheric pressure and increasing the temperature of the molten mixture to an elevated temperature under conditions sufficient to form a modified PBT containing at least one residue derived from the poly(ethylene terephthalate) component.

The composition can comprise a combination of virgin poly(alkylene terephthalate) and modified poly(alkylene terephthalate), including a combination of virgin and modified poly(1,4-butylene terephthalate), the latter obtained from recycled poly(ethylene terephthalate) as described above.

The composition comprises the poly(alkylene terephthalate) in an amount of 35 to 76 weight percent, based on the total weight of the composition. Within this range, the poly(alkylene terephthalate) amount can be 35 to 66 weight percent, specifically 38 to 60 weight percent, more specifically 42 to 55 weight percent.

In addition to the poly(alkylene terephthalate), the composition comprises an impact modifier. The impact modifier includes a polyolefin elastomer. Examples of polyolefin elastomers include polyisobutylene (PIB), ethylene/propylene copolymer, ethylene/1-butene copolymer, ethylene/1-octene copolymer, ethylene/propylene/diene terpolymer, ethylene/vinyl acetate copolymer, and combinations thereof. The polyolefin elastomer comprises an ethylene/1-octene copolymer. In some embodiments, the polyolefin elastomer comprises an ethylene/1-octene copolymer and an ethylene/vinyl acetate copolymer.

The impact modifier can, optionally, further include a thermoplastic polyester elastomer. Thermoplastic polyester elastomers are made by block copolymerization or graft polymerization or physical blending of two polymers, one being a thermoplastic polyester and the other being an elastomeric polyether. In some embodiments, the thermoplastic polyester elastomer is a block copolymer comprising at least one thermoplastic polyester block and at least one elastomeric polyether block. In some embodiments, the polyester block comprises poly(ethylene iso-/terephthalate), poly(butylene iso-/terephthalate), poly(ethylene iso-/terephthalate-co-butylene iso-/terephthalate), or a combination thereof. It will be understood that "iso-/terephthalate" includes isophthalate, terephthalate, and combinations of isophthalate and terephthalate. In some embodiments, the polyether block comprises polyoxyethylene, polyoxy-1,2-propylene, polyoxy-1,3-propylene, polyoxy-1,2-butylene, polyoxy-1,3-butylene, polyoxy-1,4-butylene, poly(pentamethylene oxide), poly(hexamethylene oxide), or a combination thereof. In some embodiments, the polyether block has a number average molecular weight of 400 to 6,000 atomic mass units, specifically 600 to 4,000 atomic mass units. In a specific embodiment, the thermoplastic polyester elastomer comprises a poly(butylene iso-/terephthalate) block and a polyoxybutylene block.

In some embodiments, the impact modifier comprises the thermoplastic polyester elastomer, and the thermoplastic polyester elastomer comprises a poly(alkylene iso-/terephthalate)-*b*-poly(alkylene ether).

In some embodiments, the impact modifier comprises the thermoplastic polyester elastomer, and the thermoplastic polyester elastomer comprises a poly(butylene iso-/terephthalate)-*b*-poly(butylene ether).

In some embodiments, the impact modifier comprises an ethylene/1-octene copolymer and a poly(butylene iso-/terephthalate)-*b*-poly(butylene ether).

The composition comprises the impact modifier in an amount of 2 to 6 weight percent, based on the total weight of the composition, provided that the amount of polyolefin elastomer does not exceed 5 weight percent. Polyolefin elastomer amounts in excess of 5 weight percent can be detrimental to flame retardancy. Within the range of 2 to 6 weight percent, the impact modifier amount can be 2.5 to 5.5 weight percent, specifically 3.5 to 5.5 weight percent.

In addition to the poly(alkylene terephthalate) and the impact modifier, the composition comprises glass fibers. Suitable glass fibers include those based on E, A, C, ECR, R, S, D, and NE glasses, as well as quartz. In some embodiments, the glass fiber has a diameter of 2 to 30 micrometers, specifically 5 to 25 micrometers, more specifically 10 to 15 micrometers. In some embodiments, the length of the glass fibers before compounding is 2 to 7 millimeters, specifically 3 to 5 millimeters. The glass fiber can, optionally, include a so-called adhesion promoter to improve its compatibility with the poly(alkylene terephthalate). Adhesion promoters include chromium complexes, silanes, titanates, zirco-aluminates, propylene maleic anhydride copolymers, reactive cellulose esters and the like. Suitable glass fiber is commercially available from suppliers including, for example, Owens Corning, Nippon Electric Glass, PPG, and Johns Manville.

The composition comprises the glass fibers in an amount of 10 to 50 weight percent, based on the total weight of the composition. Within this range, the glass fiber amount can be 20 to 40 weight percent, specifically 25 to 35 weight percent.

In addition to the poly(alkylene terephthalate), the impact modifier, and the glass fibers, the composition comprises a flame retardant. The flame retardant includes a metal dialkylphosphinate, a melamine-based flame retardant, and a flame retardant synergist comprising an organophosphine oxide, an oligomeric or polymeric bis(phenoxy)phosphazene, an organophosphate ester, or a combination thereof.

As used herein, the term "metal dialkylphosphinate" refers to a salt comprising at least one metal cation and at least one dialkylphosphinate anion. In some embodiments, the metal dialkylphosphinate has the formula 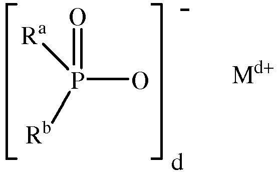 wherein R^{a} and R^{b} are each independently C₁-C₆ alkyl; M is calcium, magnesium, aluminum, or zinc; and d is 2 or 3. Examples of R^{a} and R^{b} include methyl, ethyl, n-propyl, isopropyl, n-butyl, tert-butyl, and n-pentyl. In some embodiments, R^{a} and R^{b} are ethyl, M is aluminum, and d is 3 (that is, the metal dialkylphosphinate is aluminum tris(diethylphosphinate)).

Melamine-based flame retardants include melamine phosphate, melamine pyrophosphate, melamine polyphosphate, melamine cyanurate, and combinations thereof. In some embodiments, the melamine-based flame retardant comprises melamine polyphosphate.

The flame retardant synergist includes an organophosphine oxide, an oligomeric or polymeric bis(phenoxy)phosphazene, an organophosphate ester, or a combination thereof. The organophosphine oxide has the formula 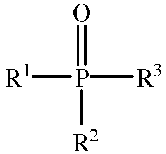 wherein R¹, R², and R³ are each independently C₄-C₂₄ hydrocarbyl. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen. The C₄-C₂₄ hydrocarbyl can be, for example, C₄-C₂₄ alkyl, C₆-C₂₄ aryl, C₇-C₂₄ alkylaryl, or C₇-C₂₄ arylalkyl. Specific organophosphine oxides include triphenylphosphine oxide, tri-p-tolyl-phosphine oxide, tris(4-nonylphenyl)phosphine oxide, tricyclohexylphosphine oxide, tri-n-butylphosphine oxide, tri-n-hexylphosphine oxide, tri-n-octylphosphine oxide, benzyl bis(cyclohexyl)phosphine oxide, benzyl bis(phenyl)phosphine oxide, phenyl bis(n-hexyl)phosphine oxide, and combinations thereof. In some embodiments, the organophosphine oxide comprises triphenylphosphine oxide.

The bis(phenoxy)phosphazene can be oligomeric or polymeric, and it can be cyclic or linear. In some embodiments, the bis(phenoxy)phosphazene is cyclic and has the structure 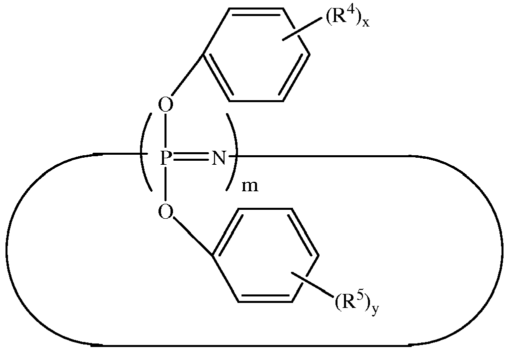 wherein m is an integer of 3 to 25; x and y are each independently 0, 1, 2, 3, 4, or 5; and each occurrence of R⁴ and R⁵ is halogen, C₁-C₁₂ alkyl, or C₁-C₁₂ alkoxyl.

In other embodiments, the bis(phenoxy)phosphazene is linear and has the structure 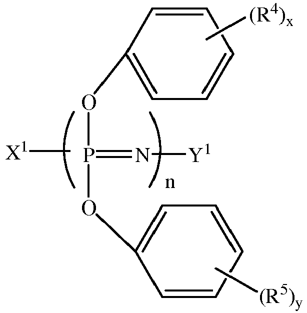 wherein n is an integer from 3 to 10,000; X¹ represents a -N=P(OPh)₃ group or a -N=P(O)(OPh) group wherein Ph represents a phenyl group; Y¹ represents a -P(OPh)₄ group or a -P(O)(OPh)₂ group; x and y are each independently 0, 1, 2, 3, 4, or 5; and each occurrence of R⁴ and R⁵ is halogen, C₁-C₁₂ alkyl, or C₁-C₁₂ alkoxyl.

Commercially available oligomeric and polymeric bis(phenoxy)phosphazenes include LY202 from Lanyin Chemical Co., Ltd., FP-110 from Fushimi Pharmaceutical Co., Ltd., and SPB-100 from Otsuka Chemical Co., Ltd.

Exemplary organophosphate esters include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester comprises tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), t-butylphenyl diphenyl phosphates (CAS Reg. No. 56803-37-3), bis(t-butylphenyl) phenyl phosphates (CAS Reg. No. 65652-41-7), tris(t-butylphenyl) phosphates (CAS Reg. No. 78-33-1), or a combination thereof.

In some embodiments, the flame retardant synergist comprises triphenylphosphine oxide, oligomeric bis(phenoxy)phosphazene, or a combination thereof. In some embodiments, the flame retardant synergist comprises triphenylphosphine oxide and oligomeric bis(phenoxy)phosphazene.

The composition comprises 14 to 25 weight percent of the flame retardant, based on the total weight of the composition. Within this range, the flame retardant amount can be 14 to 20 weight percent, specifically 15 to 19 weight percent. Included in the flame retardant amount is 5 to 15 weight percent of the metal dialkylphosphinate. Within this range, the metal dialkylphosphinate amount can be 7 to 13 weight percent, specifically 8 to 12 weight percent. Also included in the flame retardant amount is 2 to 8 weight percent of the melamine-based flame retardant. Within this range, the melamine-based flame retardant amount can be 3 to 7 weight percent, specifically 3 to 6 weight percent. Also included in the flame retardant amount is 1 to 6 weight percent of the flame retardant synergist. Within this range, the flame retardant synergist amount can be 1 to 5 weight percent, specifically 2 to 4 weight percent.

The composition can, optionally, further comprise a polyetherimide. As used herein, the term "polyetherimide" refers to a polymer comprising repeat units having the structure 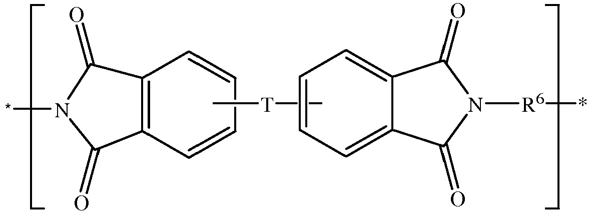 wherein R⁶ is C₁-C₁₈ hydrocarbylene; and T is -O- or a group of the formula -O-Z-O-wherein the divalent bonds of the -O- or the -O-Z-O- group are in the 3,3', 3,4', 4,3', or the 4,4' positions of the adjoining phthalimide groups, and wherein Z comprises 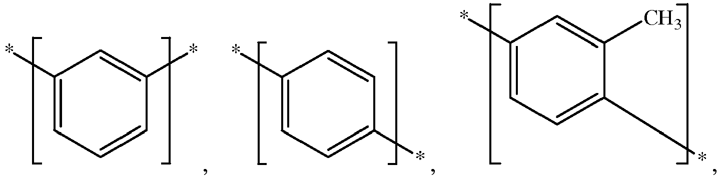 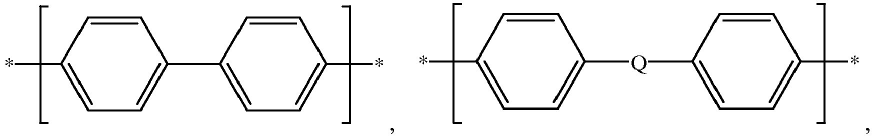 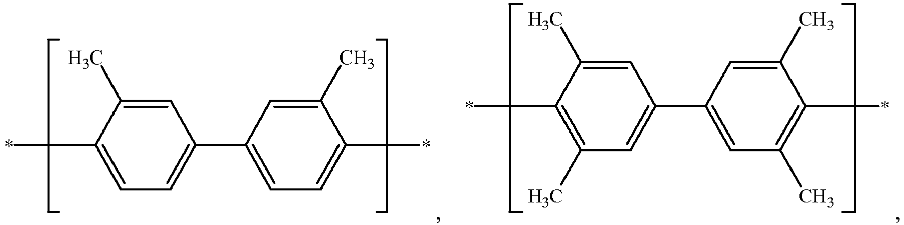 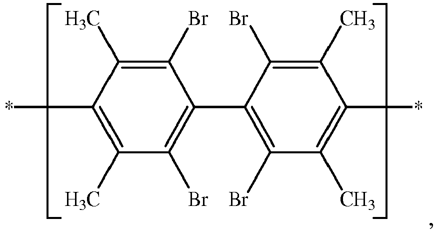 or 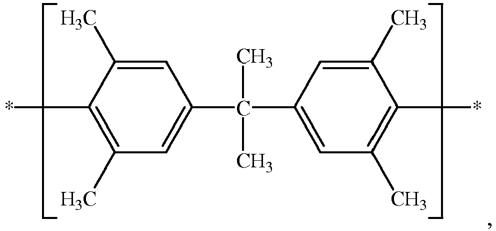 wherein Q is a divalent moiety comprising -O-, -S-, -C(O)-, -SO₂-, -SO-, -C_{y}H_{2y}- where y is 1 to 8, or -CₚH_{q}Fᵣ- where p is from 1 to 8, q is 0 to 15, r is 1 to 16, and q + r = 2p.

In some embodiments, the polyetherimide comprises 10 to 1000, specifically 50 to 500, of the repeat units described above.

In some embodiments, each occurrence of R⁶ is independently p-phenylene or m-phenylene, and T is a divalent moiety of the formula

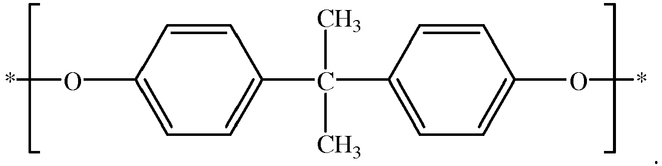

In some embodiments, the polyetherimide comprises 10 to 1000 repeating units having the structure 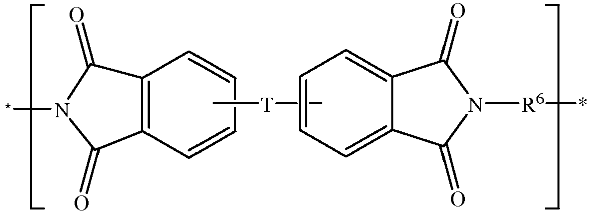 wherein R⁶ is C₆-C₁₈ arylene; T is -O- or a group of the formula -O-Z-O- wherein the divalent bonds of the -O- or the -O-Z-O- group are in the 3,3', 3,4', 4,3', or the 4,4' positions, and wherein Z comprises 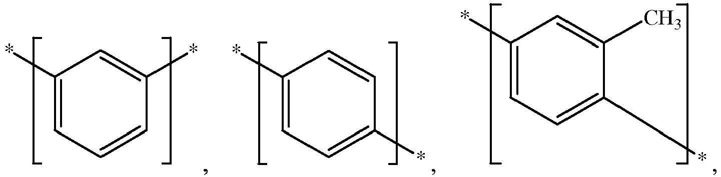 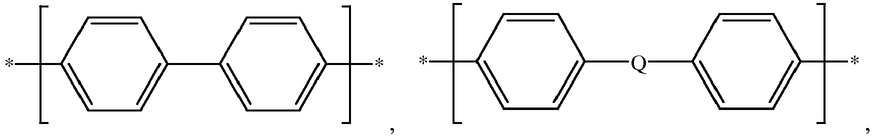 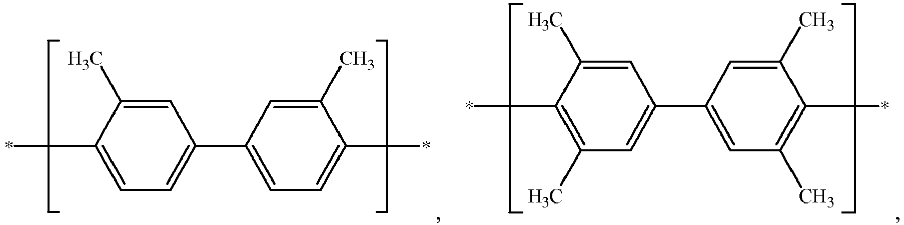 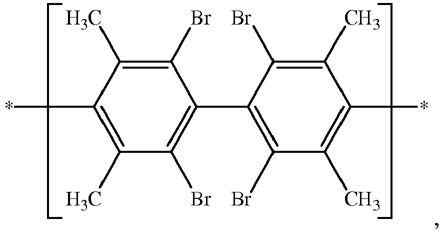 or 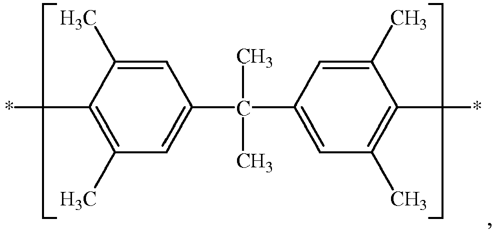 wherein Q comprises -O-, -S-, -C(O)-, -SO₂-, -SO-, -C_{y}H_{2y}- where y is 1 to 8, or -CₚH_{q}Fᵣ-where p is from 1 to 8, q is 0 to 15, r is 1 to 16, and q + r = 2p.

In some embodiments, R⁶ is independently at each occurrence meta-phenylene or para-phenylene, and T has the structure

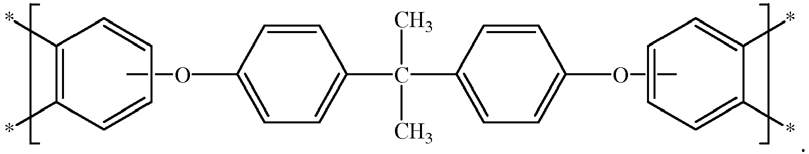

The repeating units of the polyetherimide are formed by the reaction of a bis(ether anhydride) and a diamine. Illustrative examples of aromatic bis(ether anhydride)s include 2,2-bis[4-(3,4-dicarboxyphenoxy)phenyl]propane dianhydride, 4,4'-bis(3,4-dicarboxyphenoxy)diphenyl ether dianhydride, 4,4'-bis(3,4-dicarboxyphenoxy)diphenyl sulfide dianhydride, 4,4'-bis(3,4-dicarboxyphenoxy)benzophenone dianhydride, 4,4'-bis(3,4-dicarboxyphenoxy)diphenyl sulfone dianhydride, 2,2-bis[4-(2,3-dicarboxyphenoxy)phenyl]propane dianhydride, 4,4'-bis(2,3-dicarboxyphenoxy)diphenyl ether dianhydride, 4,4'-bis(2,3-dicarboxyphenoxy)diphenyl sulfide dianhydride, 4,4'-bis(2,3-dicarboxyphenoxy)benzophenone dianhydride, 4,4'-bis(2,3-dicarboxyphenoxy)diphenyl sulfone dianhydride, 4-(2,3-dicarboxyphenoxy)-4'-(3,4-dicarboxyphenoxy)diphenyl-2,2-propane dianhydride, 4-(2,3-dicarboxyphenoxy)-4'-(3,4-dicarboxyphenoxy)diphenyl ether dianhydride, 4-(2,3-dicarboxyphenoxy)-4'-(3,4-dicarboxyphenoxy)diphenyl sulfide dianhydride, 4-(2,3-dicarboxyphenoxy)-4'-(3,4-dicarboxyphenoxy)benzophenone dianhydride, 4-(2,3-dicarboxyphenoxy)-4'-(3,4-dicarboxyphenoxy)diphenyl sulfone dianhydride, and mixtures thereof.

Diamines useful for forming the repeating units of the polyetherimide include those having the formula

H₂N-R⁶-NH₂

wherein R⁶ is as defined above. Examples of specific organic diamines are disclosed, for example, in U.S. Patent Nos. 3,972,902 to Heath et al. and 4,455,410 to Giles. Exemplary diamines include ethylenediamine, propylenediamine, trimethylenediamine, diethylenetriamine, triethylenetertramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2,2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylenediamine, 5-methyl-4,6-diethyl-1,3-phenylenediamine, benzidine, 3,3'-dimethylbenzidine, 3,3'-dimethoxybenzidine, 1,5-diaminonaphthalene, bis(4-aminophenyl) methane, bis(2-chloro-4-amino-3, 5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis (4-aminophenyl) sulfone, bis(4-aminophenyl) ether, 1,3-bis(3-aminopropyl) tetramethyldisiloxane, and mixtures thereof. In some embodiments, the diamine is an aromatic diamine, more specifically, m-phenylenediamine, p-phenylenediamine, sulfonyl dianiline, or a mixture thereof.

In some embodiments, the polyetherimide comprises an imidized copolymer of 1,3-phenylenediamine (CAS Registry No. 108-45-2) and 5,5'-[(1-methylethylidene)bis(4,1-phenyleneoxy)]bis(1,3-Isobenzofurandione) (CAS Registry No. 38103-06-9).

In general, polyetherimide-forming reactions can be carried out employing various solvents, e.g., o-dichlorobenzene, m-cresol/toluene, and the like, to effect a reaction between the dianhydride and the diamine, at temperatures of 100°C to 250°C. Alternatively, the polyetherimide block can be prepared by melt polymerization or interfacial polymerization, e.g., melt polymerization of an aromatic bis(anhydride) and a diamine by heating a mixture of the starting materials to elevated temperatures with concurrent stirring. Generally, melt polymerizations employ temperatures of 200°C to 400°C.

A chain-terminating agent can be employed to control the molecular weight of the polyetherimide. Monofunctional amines such as aniline, or monofunctional anhydrides such as phthalic anhydride can be employed.

In some embodiments, the polyetherimide has a melt index of 0.1 to 10 grams per minute, determined according to ASTM D 1238-13 at 350°C, using a 6.6 kilogram load. In some embodiments, the polyetherimide resin has a weight average molecular weight of 10,000 to 150,000 atomic mass units, as determined by gel permeation chromatography using polystyrene standards. In some embodiments, the polyetherimide has a weight average molecular weight of 20,000 to 60,000 atomic mass units. In some embodiments, the polyetherimide has an intrinsic viscosity greater than or equal to 0.2 deciliter per gram, specifically 0.35 to 0.7 deciliter per gram, measured by Ubbelohde viscometer in m-cresol at 25°C.

Polyetherimides are commercially available from, for example, SABIC Innovative Plastics and Kuraray Co. Ltd.

When present in the composition, the polyetherimide is used in an amount of 0.5 to 3 weight percent, based on the total weight of the composition. Within this range, the polyetherimide amount can be 0.5 to 2 weight percent.

The composition can, optionally, further comprise one or more additives known in the thermoplastics art. For example, the composition can, optionally, further comprise an additive chosen from stabilizers, mold release agents, lubricants, processing aids, drip retardants, nucleating agents, UV blockers, dyes, pigments, antioxidants, anti-static agents, mineral oil, metal deactivators, antiblocking agents, and combinations thereof. When present, such additives are typically used in a total amount of less than or equal to 5 weight percent, specifically less than or equal to 2 weight percent, more specifically less than or equal to 1 weight percent, based on the total weight of the composition.

The composition can, optionally, minimize or exclude components other than those described herein as required or optional. For example, in some embodiments, the composition comprises 0 to 2 weight percent, specifically 0 weight percent, of polycarbonates. In some embodiments, the composition comprises 0 to 2 weight percent, specifically 0 weight percent, of polyestercarbonates. In some embodiments, the composition comprises 0 to 2 weight percent, specifically 0 weight percent, of polycarbonate-polysiloxane block copolymers. In some embodiments, the composition comprises 0 to 2 weight percent, specifically 0 weight percent, of acrylonitrile-butadiene-styrene terpolymers. In some embodiments, the composition comprises 0 to 2 weight percent, specifically 0 weight percent, of core-shell copolymer impact modifiers having a core comprising poly(butyl acrylate) and a shell comprising poly(methyl methacrylate). In some embodiments, the composition comprises 0 to 2 weight percent, specifically 0 weight percent, of terpolymers of ethylene, methyl acrylate, and glycidyl methacrylate. In some embodiments, the composition comprises 0 to 2 weight percent, specifically 0 weight percent, of metal hydroxide flame retardants. In some embodiments, the composition comprises 0 to 2 weight percent, specifically 0 weight percent, of fillers other than the glass fibers.

In some embodiments, the composition minimizes or excludes organic phosphonates. In some embodiments, the composition comprises 0 to 0.05 weight percent of organic phosphonates, based on the total weight of the composition. In some embodiments, the composition comprises 0 to 0.05 weight percent of organic phosphonates of the formula 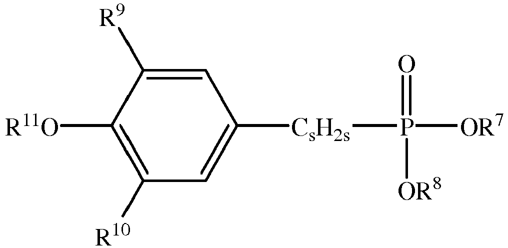 wherein R⁷ is hydrogen, C₁-C₂₀ alkyl, unsubstituted or C₁-C₄ alkyl-substituted phenyl or naphthyl; R⁸ is hydrogen, C₁-C₂₀ alkyl, unsubstituted or C₁-C₄ alkyl-substituted phenyl or naphthyl or M₁^{r+}/r, n is an integer from 0 to 6, M₁^{r+} is an r-valent metal ion or an ammonium ion, and r is an integer from 1 to 4; R⁹ is isopropyl, isobutyl, tert-butyl, cyclohexyl or is cycloalkyl substituted by from 1 to 3 C₁-C₄ alkyl groups; R¹⁰ is hydrogen, C₁-C₄ alkyl, C₃-C₈ cycloalkyl, or cyclohexyl substituted by from 1 to 3 C₁-C₄ alkyl groups; and R¹¹ is hydrogen, C₁-C₁₈ alkyl, trimethylsilyl, benzyl, phenyl or sulfonyl.

In a very specific embodiment of the composition, the poly(alkylene terephthalate) comprises poly(butylene terephthalate); the impact modifier comprises an ethylene/1-octene copolymer and a poly(butylene phthalate-co-alkylene ether phthalate); the flame retardant comprises aluminum tris(diethylphosphinate), melamine polyphosphate, triphenylphosphine oxide, and an oligomeric bis(phenoxy)phosphazene; the composition further comprises a polyetherimide; and the composition comprises 42 to 52 weight percent of the poly(alkylene terephthalate), 3 to 6 weight percent of the impact modifier, 1.5 to 4.5 weight percent of the ethylene/1-octene copolymer, 0.5 to 3 weight percent of the poly(butylene phthalate-co-alkylene ether phthalate), 25 to 35 weight percent of the glass fibers, 14 to 21 weight percent of the flame retardant, 8 to 12 weight percent of the aluminum tris(diethylphosphinate), 2 to 6 weight percent of the melamine polyphosphate, 1 to 4 weight percent of the triphenylphosphine oxide, and 0.5 to 3 weight percent of the oligomeric bis(phenoxy)phosphazene.

The composition is useful for forming articles, including a socket for a light emitting diode, a fan blade, a fan housing, or an electrically insulating part of an electrical connector (including an electrically insulating part of an electric vehicle charge coupler). Other articles include electrically insulating parts of electrical relays, and other parts for the electrical, electronics, lighting, appliance, automotive, and healthcare industries. Suitable methods of forming such articles include single layer and multilayer sheet extrusion, injection molding, blow molding, profile extrusion, pultrusion, compression molding, thermoforming, pressure forming, hydroforming, vacuum forming, and the like. Combinations of the foregoing article fabrication methods can be used.

Thus, one embodiment is an article comprising a composition, comprising: 35 to 76 weight percent of a poly(alkylene terephthalate); 2 to 6 weight percent of an impact modifier comprising a polyolefin elastomer comprising an ethylene/1-octene copolymer, and, optionally, a thermoplastic polyester elastomer, provided that the amount of polyolefin elastomer does not exceed 5 weight percent; 10 to 50 weight percent glass fibers; and 14 to 25 weight percent of a flame retardant comprising 5 to 15 weight percent of a metal dialkylphosphinate, 2 to 8 weight percent of a melamine-based flame retardant, and 1 to 6 weight percent of a flame retardant synergist comprising an organophosphine oxide, an oligomeric or polymeric bis(phenoxy)phosphazene, an organophosphate ester, or a combination thereof; wherein all weight percent values are based on the total weight of the composition.

In a very specific embodiment of the article, the poly(alkylene terephthalate) comprises poly(butylene terephthalate); the impact modifier comprises an ethylene/1-octene copolymer and a poly(butylene phthalate-co-alkylene ether phthalate); the flame retardant comprises aluminum tris(diethylphosphinate), melamine polyphosphate, triphenylphosphine oxide, and an oligomeric bis(phenoxy)phosphazene; the composition further comprises a polyetherimide; and the composition comprises 42 to 52 weight percent of the poly(alkylene terephthalate), 3 to 6 weight percent of the impact modifier, 1.5 to 4.5 weight percent of the ethylene/1-octene copolymer, 0.5 to 3 weight percent of the poly(butylene phthalate-co-alkylene ether phthalate), 25 to 35 weight percent of the glass fibers, 14 to 21 weight percent of the flame retardant, 8 to 12 weight percent of the aluminum tris(diethylphosphinate), 2 to 6 weight percent of the melamine polyphosphate, 1 to 4 weight percent of the triphenylphosphine oxide, and 0.5 to 3 weight percent of the oligomeric bis(phenoxy)phosphazene.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLE 1

Components used to prepare compositions are summarized in Table 1.

**Table 1**

| Component | Description |
|---|---|
| PBT | Poly(butylene terephthalate), CAS Reg. No. 26062-94-2, having an intrinsic viscosity of about 1.3 deciliter per gram, measured at 23 °C in 60:40 weight/weight phenol/tetrachlorethane; obtained as PBT 1100-211X Resin from Chang Chun Plastics Co., Ltd. |
| DEPAL | Aluminum tris(diethylphosphinate), CAS Reg. No. 225789-38-8, obtained as EXOLIT™ OP1240 from Clariant. |
| MPP | Melamine polyphosphate, CAS Reg. No. 56386-64-2, obtained as BUDIT™ 3141 from Budenheim Iberica, S.L.U. |
| PEI | Poly(2,2'bis(4-(3,4-dicarboxyphenoxy)phenylpropane)-1,3-phenylene bisimide), CAS Reg. No. 61128-46-9, obtained as ULTEM™ 1010 Resin from Sabic Innovative Plastics. |
| Phosphazene | Bis(phenoxy)phosphazene oligomer, CAS Reg. No. 28212-48-8; obtained as SPB-100 from Otsuka. |
| TPPO | Triphenylphosphine oxide, CAS Reg. No. 791-28-6; obtained from Shanghai Changgen Chemical Technology Co., Ltd. |
| Talc | Mg₃(Si₄O₁₀)(OH)₂, CAS Reg. No. 14807-96-6; obtained as JETFINE™ 3CA from Luzenac Europe SAS. |
| ABS | Poly(acrylonitrile-butadiene-styrene), CAS Reg. No. 9003-56-9, high rubber grafted, having a polybutadiene content of about 55 weight percent; obtained as ABS HR 181 from Kumho. |
| POE | Poly(ethylene-octene), CAS Reg. No. 26221-73-8, having a 1-octene content of about 30 weight percent; obtained as ENGAGE™ 8401 from Dow Chemical Co., Ltd. |
| Acrylate Elastomer | A core-shell copolymer impact modifier having about 80 weight percent of a core comprising poly(butyl acrylate) and about 20 weight percent of a shell comprising poly(methyl methacrylate); obtained as PARALOID™ EXL-3330 from Dow Chemical Co., Ltd. |
| EVA | Poly(ethylene-vinyl acetate), CAS Reg. No. 24937-78-8, having a vinyl acetate content of about 33 weight percent, obtained as EVATANE™ 33-45 from Atofina Chemicals. |
| TPEE | Polyetherester block copolymer; obtained as HYTREL™ 5555HS from DuPont China Holding Co., Ltd. |
| EMAGMA | Copolymer of ethylene, methyl acrylate, and glycidyl methacrylate, CAS Reg. No. 51541-08-3, having a methyl acrylate content of about 24 weight percent and a glycidyl methacrylate content of about 8 weight percent; obtained as LOTADER™ AX8900 Resin from Arkema Inc. |
| GF 13 | Glass fiber, organic silane sized, having a diameter of about 13 micrometers and a pre-compounded length of about 4 millimeters; obtained as ECS303A from Chongqing Polycomp International Corp. |
| GF 10 | Glass fiber, organic silane sized, having a diameter of about 10 micrometers and a pre-compounded length of about 4 millimeters; obtained as ECS-303H from Chongqing Polycomp International Corp. |
| TSAN | Polyacrylonitrile-encapsulated polytetrafluoroethylene having 50 weight percent polytetrafluoroethylene; obtained as CYCOLAC™ INP449 Resin from Sabic Innovative Plastics. |
| Antioxidant | Tetrakis(methylene(3,5-di-tert-butyl-4-hydroxyhydrocinnamate)methane, CAS Reg. No. 6683-19-8; obtained as IRGANOX™ 1010 from BASF Performance Chemicals Co., Ltd. |
| PETS | Pentaerythritol tetrastearate, CAS Reg. No. 115-83-3, obtained as PETS from FACI ASIA PACIFIC PTE LTD. |

To prepare the compositions, all the ingredients except glass fiber were dry-blended, then added to the feed throat of a twin-screw extruder. Glass fiber was fed to the extruder using a separate feeder downstream. The composition was melt-kneaded using a throughput of 45 kilograms per hour and zone temperatures of 120 °C / 250 °C / 250 °C / 250 °C / 250 °C / 250 °C / 260 °C / 260 °C / 260 °C / 270 °C / 200 °C from feed throat to die. Four millimeter strands were extruded through the die and cooled in a water bath prior to pelletizing. Pellets were dried at 120°C for 4 hours prior to use for injection molding.

Test specimens were injection molded in accordance with corresponding ASTM methods using a 150 ton injection molding machine operating at a melt temperature of 250 °C, a mold temperature 50 °C, and a back pressure of 30 kilogram-force per centimeter².

Properties were determined using the procedures and conditions summarized in Table 2, where "MFR" is melt flow rate, "CTI" is comparative tracking index, "kg" is kilograms, "mm" is millimeters, "min" is minutes, "g" is grams, "J" is joules, "m" is meter, and "MPa" is megapascals.

In Table 2, "UL 94" refers to the 20 millimeter vertical burn test of Underwriter's Laboratory Bulletin 94, "Tests for Flammability of Plastic Materials, UL 94", 20 mm Vertical Burning Flame Test. Before testing, flame bars with a thickness of 1.50 millimeters were conditioned at 23°C and 50% relative humidity for at least 48 hours. In the UL 94 20 mm Vertical Burning Flame Test, a set of five flame bars was tested. For each bar, a flame was applied to the bar then removed, and the time required for the bar to self-extinguish (first afterflame time, t1) was noted. The flame was then reapplied and removed, and the time required for the bar to self-extinguish (second afterflame time, t2) and the post-flame glowing time (afterglow time, t3) were noted. To achieve a rating of V-0, the afterflame times t1 and t2 for each individual specimen must have been less than or equal to 10 seconds; and the total afterflame time for all five specimens (t1 plus t2 for all five specimens) must have been less than or equal to 50 seconds; and the second afterflame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. To achieve a rating of V-1, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; and the cotton indicator cannot have been ignited by flaming particles or drops. To achieve a rating of V-2, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; but the cotton indicator can have been ignited by flaming particles or drops. Compositions not achieving a rating of V-2 were considered to have failed.

**Table 2**

| Property | Standard | Conditions | Specimen Type | Units |
|---|---|---|---|---|
| MFR | ASTM D1238-10 | 250°C, 5 kg | Granule | g/10 minutes |
| Notched Izod | ASTM D256-10 | 23 °C, 3.2 mm | Bar - 63.5 × 12.7 × 3.2 mm | J/m |
| Tensile Modulus | ASTM D638-10 | 5 mm/min | Tensile Type I Bar, gage length 50 mm | MPa |
| Tensile Elongation | ASTM D638-10 | 5 mm/min | Tensile Type I Bar, gage length 50 mm | Percent |
| Vicat | ASTM 1525-09 | 50 N, 120°C/hour | Bar - 63.5 × 12.7 × 3.2 mm | °C |
| Flame Retardancy | UL 94 | 1.50 mm thickness | Bar - 127 × 12.7 × 1.50 mm | V-0, V-1, V-2 |
| CTI | IEC 60112 | 0.1 weight percent NH₄Cl | 3.2 mm thick color chip | Volts |

Compositions and properties are summarized in Table 3.

As illustrated by Comparative Example 1, a glass fiber reinforced poly(alkylene terephthalate) composition with high ductility as well as high comparative tracking index and a UL 94 rating of V-0 at 1.5 millimeters cannot be achieved by a flame retardant blend of phosphinate and melamine-based flame retardant without using any impact modifier. However, including a phosphorus flame retardant synergist such as an oligomeric or polymeric bis(phenoxy)phosphazene and/or an organophosphine oxide, together with an impact modifier that is a polyolefin elastomer optionally in combination with a thermoplastic polyester elastomer, makes it possible to achieve high ductility (Notched Izod toughness ≥ 90 J/m and tensile elongation ≥ 2.5%). These advantages are achieved without significant sacrifice in comparative tracking index (CTI ≥ 600 V), and flame retardancy (UL 94 vertical burn rating of V-0 at a thickness of 1.5 millimeters), melt flow (MFR ≥ 17 grams/10 minutes), or heat resistance (Vicat ≥ 197 °C). See Examples 1-6. The property balance of the composition can be further improved by using as the impact modifier a combination of a polyolefin elastomer and a thermoplastic polyester elastomer, as well as a small amount of charring agent, such as polyetherimide. See Examples 3 and 4. The benefits of the invention are observed with glass fibers having a diameter of 13 micrometers (Examples 1-5) and 10 micrometers (Example 6). In contrast, as shown in Comparative Examples 2-7, if there is no impact modifier included, or the impact modifier lacks polyolefin elastomer (for example, if it is an acrylonitrile/butadiene/styrene terpolymer, an acrylic rubber, a reactive elastomer such as EMAGMA, or thermoplastic polyester elastomer alone), or if the polyolefin elastomer content exceeds 5 weight percent, either the ductility or the flame retardancy is significantly compromised. Similarly, if there is no flame retardant synergist (Comparative Example 8), or the flame retardant synergist is of a type other than an organophosphine oxide, a bis(phenoxy)phosphazene oligomer), an organophosphate ester, or a combination thereof (for example talc in Comparative Example 9, or polyetherimide in Comparative Example 10), then ductility is significantly compromised.

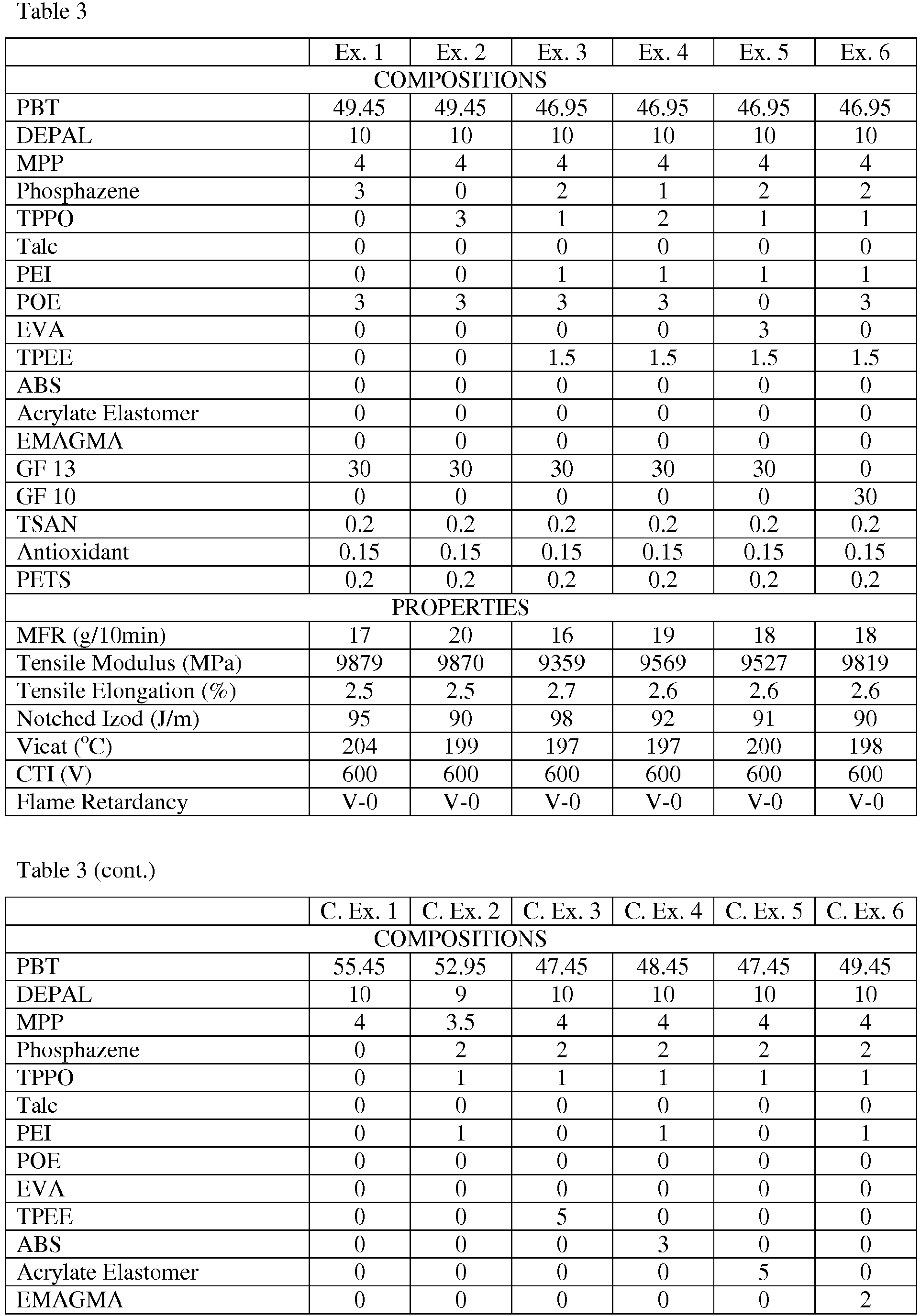

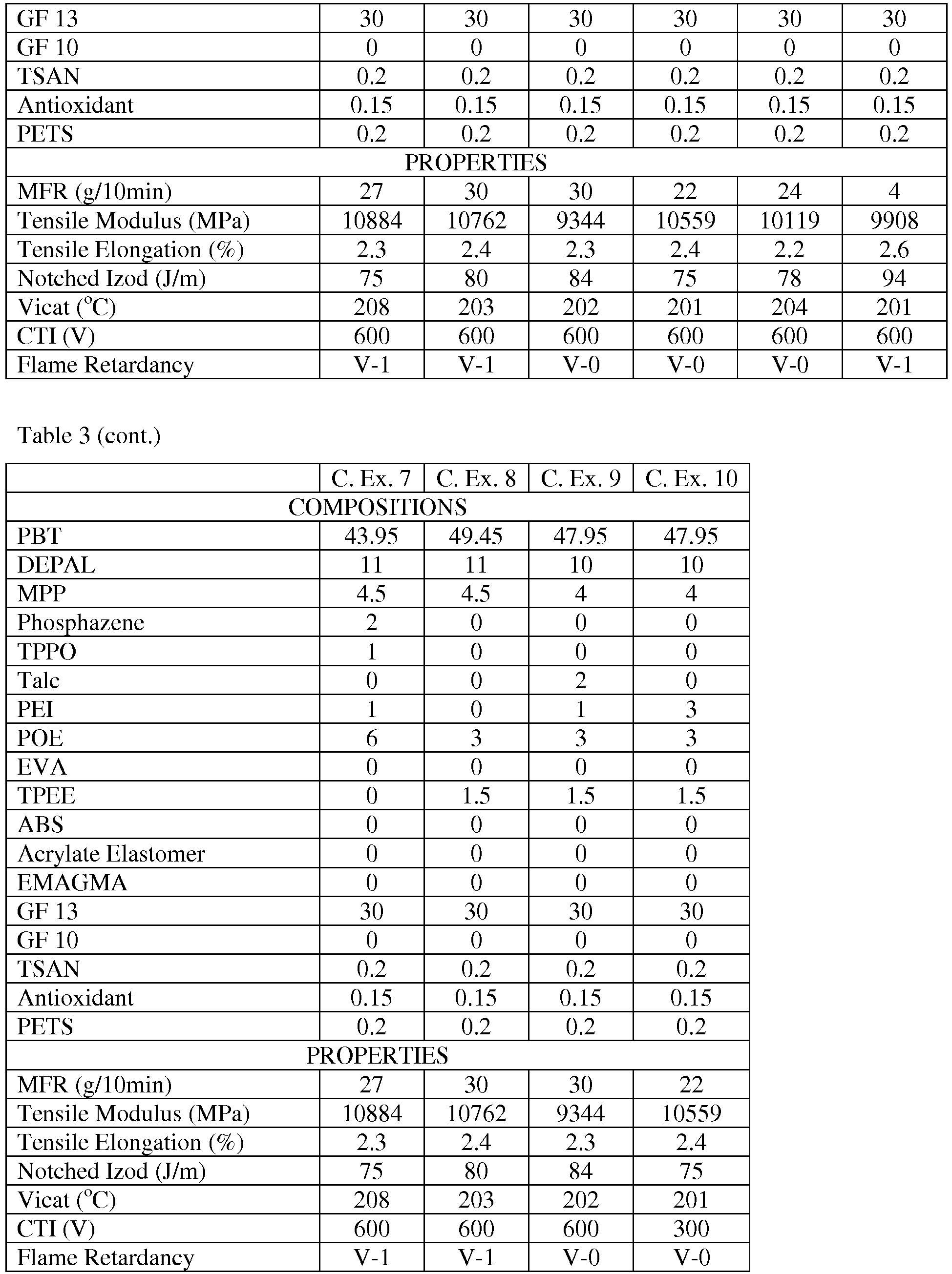

## Claims

1. A composition, comprising:
35 to 76 weight percent of a poly(alkylene terephthalate);
2 to 6 weight percent of an impact modifier comprising a polyolefin elastomer comprising an ethylene/1-octene copolymer, and, optionally, a thermoplastic polyester elastomer, provided that the amount of polyolefin elastomer does not exceed 5 weight percent;
10 to 50 weight percent glass fibers; and
14 to 25 weight percent of a flame retardant comprising
5 to 15 weight percent of a metal dialkylphosphinate,
2 to 8 weight percent of a melamine-based flame retardant, and
1 to 6 weight percent of a flame retardant synergist comprising an organophosphine oxide, an oligomeric or polymeric bis(phenoxy)phosphazene, an organophosphate ester, or a combination thereof;
wherein all weight percent values are based on the total weight of the composition.

2. The composition of claim 1, wherein the poly(alkylene terephthalate) comprises poly(butylene terephthalate).

3. The composition of any of claims 1 or 2, wherein the impact modifier comprises the thermoplastic polyester elastomer, and wherein the thermoplastic polyester elastomer comprises a poly(alkylene iso-/terephthalate)-*b*-poly(alkylene ether).

4. The composition of claim 3, wherein the thermoplastic polyester elastomer comprises a poly(butylene iso-/terephthalate)-*b*-poly(butylene ether).

5. The composition of any of claims 1 or 2, wherein the metal dialkylphosphinate comprises aluminum tris(diethylphosphinate).

6. The composition of any of claims 1 or 2, wherein the melamine-based flame retardant comprises melamine phosphate, melamine pyrophosphate, melamine polyphosphate, melamine cyanurate, or a combination thereof.

7. The composition of any of claims 1 or 2, wherein the melamine-based flame retardant comprises melamine polyphosphate.

8. The composition of any of claims 1 or 2, wherein the flame retardant synergist comprises triphenylphosphine oxide, oligomeric bis(phenoxy)phosphazene, or a combination thereof.

9. The composition of any of claims 1 or 2, wherein the flame retardant synergist comprises triphenylphosphine oxide and oligomeric bis(phenoxy)phosphazene.

10. The composition of any of claims 1 or 2, further comprising 0.5 to 3 weight percent of a polyetherimide.

11. The composition of any of claims 1 or 2, comprising 0 to 0.05 weight percent of organic phosphonates of the formula 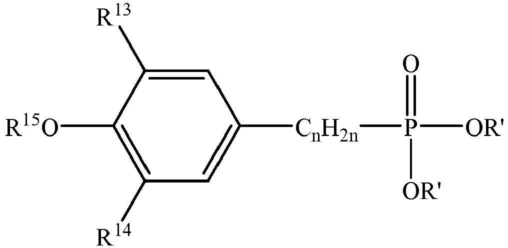 wherein
R is hydrogen, C₁-C₂₀alkyl, unsubstituted or C₁-C₄alkyl-substituted phenyl or naphthyl, R' is hydrogen, C₁-C₂₀alkyl, unsubstituted or C₁-C₄alkyl-substituted phenyl or naphthyl or M₁^{r+}/r, n is an integer from 0 to 6, M₁^{r+} is an r-valent metal ion or the ammonium ion, r is an integer from 1 to 4,
R¹³ is isopropyl, isobutyl, tert-butyl, cyclohexyl or is cycloalkyl substituted by from 1 to 3 C₁-C₄alkyl groups,
R¹⁴ is hydrogen, C₁-C₄alkyl, cycloalkyl or is cyclohexyl substituted by from 1 to 3 C₁-C₄alkyl groups, and
R¹⁵ is hydrogen, Ci-Cisalkyl, trimethylsilyl, benzyl, phenyl or sulfonyl.

12. The composition of claim 1,
wherein the poly(alkylene terephthalate) comprises poly(butylene terephthalate);
wherein the impact modifier comprises the thermoplastic polyester elastomer, and the thermoplastic polyester elastomer comprises a poly(butylene phthalate-co-alkylene ether phthalate);
wherein the flame retardant comprises aluminum tris(diethylphosphinate), melamine polyphosphate, triphenylphosphine oxide, and an oligomeric bis(phenoxy)phosphazene;
wherein the composition further comprises a polyetherimide; and
wherein the composition comprises
42 to 52 weight percent of the poly(alkylene terephthalate),
3 to 6 weight percent of the impact modifier,
1.5 to 4.5 weight percent of the ethylene/1-octene copolymer,
0.5 to 3 weight percent of the poly(butylene phthalate-co-alkylene ether phthalate),
25 to 35 weight percent of the glass fibers,
14 to 21 weight percent of the flame retardant,
8 to 12 weight percent of the aluminum tris(diethylphosphinate),
2 to 6 weight percent of the melamine polyphosphate,
1 to 4 weight percent of the triphenylphosphine oxide, and
0.5 to 3 weight percent of the oligomeric bis(phenoxy)phosphazene.

13. An article comprising a composition, comprising:
35 to 76 weight percent of a poly(alkylene terephthalate);
2 to 6 weight percent of an impact modifier comprising a polyolefin elastomer comprising an ethylene/1-octene copolymer, and, optionally, a thermoplastic polyester elastomer, provided that the amount of polyolefin elastomer does not exceed 5 weight percent;
10 to 50 weight percent glass fibers; and
14 to 25 weight percent of a flame retardant comprising
5 to 15 weight percent of a metal dialkylphosphinate,
2 to 8 weight percent of a melamine-based flame retardant, and
1 to 6 weight percent of a flame retardant synergist comprising an organophosphine oxide, an oligomeric or polymeric bis(phenoxy)phosphazene, an organophosphate ester, or a combination thereof;
wherein all weight percent values are based on the total weight of the composition.

14. The article of claim 13, wherein the article is a socket for a light emitting diode, a fan blade, a fan housing, or an electrically insulating part of an electrical connector.

15. The article of claim 13 or 14,
wherein the poly(alkylene terephthalate) comprises poly(butylene terephthalate);
wherein the impact modifier comprises the thermoplastic polyester elastomer, and the thermoplastic polyester elastomer comprises a poly(butylene phthalate-co-alkylene ether phthalate);
wherein the flame retardant comprises aluminum tris(diethylphosphinate), melamine polyphosphate, triphenylphosphine oxide, and an oligomeric bis(phenoxy)phosphazene;
wherein the composition further comprises a polyetherimide; and
wherein the composition comprises
42 to 52 weight percent of the poly(alkylene terephthalate),
3 to 6 weight percent of the impact modifier,
1.5 to 4.5 weight percent of the ethylene/1-octene copolymer,
0.5 to 3 weight percent of the poly(butylene phthalate-co-alkylene ether phthalate),
25 to 35 weight percent of the glass fibers,
14 to 21 weight percent of the flame retardant,
8 to 12 weight percent of the aluminum tris(diethylphosphinate),
2 to 6 weight percent of the melamine polyphosphate,
1 to 4 weight percent of the triphenylphosphine oxide, and
0.5 to 3 weight percent of the oligomeric bis(phenoxy)phosphazene.

## Patentansprüche

1. Eine Zusammensetzung, aufweisend:
35 bis 76 Gewichtsprozent eines Polyalkylenterephthalats;
2 bis 6 Gewichtsprozent eines Schlagzähmodifizierers aufweisend ein Polyolefin-Elastomer aufweisend ein Ethylen/1-Octen-Copolymer und vorzugsweise ein thermoplastische Polyester-Elastomer, unter der Voraussetzung, dass die Menge an Polyolefin-Elastomer 5 Gewichtsprozent nicht übersteigt;
10 bis 50 Gewichtsprozent Glasfasern; und
14 bis 25 Gewichtsprozent eines Flammschutzmittels aufweisend
5 bis 15 Gewichtsprozent eines Metalldialkylphosphinats,
2 bis 8 Gewichtsprozent eines Melamin-basierten Flammschutzmittels, und
1 bis 6 Gewichtsprozent eines Flammschutzmittel-Synergisten aufweisend ein organisches Phosphanoxid, ein oligomeres oder polymeres Bis(phenoxy)phosphazen, einen organischen Phosphorsäureester oder eine Kombination hiervon;
wobei alle Gewichtsprozentwerte auf dem Gesamtgewicht der Zusammensetzung basieren.

2. Zusammensetzung nach Anspruch 1,
bei der das Polyalkylenterephthalat ein Polybutylenterephthalat aufweist.

3. Zusammensetzung nach einem der Ansprüche 1 oder 2,
bei der der Schlagzähmodifizierer das thermoplastische Polyester-Elastomer aufweist, und wobei das thermoplastische Polyester-Elastomer einen Poly(alkylen-iso-/terephthalat)-*b*-poly(alkylenether) aufweist.

4. Zusammensetzung nach Anspruch 3,
bei der das thermoplastische Polyester-Elastomer einen Poly(butylen-iso-/terephthalat)-*b*-poly(butylenether) aufweist.

5. Zusammensetzung nach einem der Ansprüche 1 oder 2,
bei der das Metalldialkylphosphinat ein Aluminium-tris(diethylphosphinat) aufweist.

6. Zusammensetzung nach einem der Ansprüche 1 oder 2,
bei der das Melamin-basierte Flammschutzmittel Melaminphosphat, Melaminpyrophosphat, Melaminpolyphosphat, Melamincyanurat oder eine Kombination hiervon aufweist.

7. Zusammensetzung nach einem der Ansprüche 1 oder 2,
bei der das Melamin-basierte Flammschutzmittel Melaminpolyphosphat aufweist.

8. Zusammensetzung nach einem der Ansprüche 1 oder 2,
bei der der Flammschutzmittel-Synergist Triphenylphosphanoxid, oligomeres Bis(phenoxy)phosphazen oder eine Kombination hiervon aufweist.

9. Zusammensetzung nach einem der Ansprüche 1 oder 2,
bei der der Flammschutzmittel-Synergist Triphenylphosphanoxid und oligomeres Bis(phenoxy)phosphazen aufweist.

10. Zusammensetzung nach einem der Ansprüche 1 oder 2,
welche weiterhin 0,5 bis 3 Gewichtsprozent eines Polyetherimids aufweist.

11. Zusammensetzung nach einem der Ansprüche 1 oder 2,
welche 0 bis 0,5 Gewichtsprozent eines organischen Phosphonats der Formel 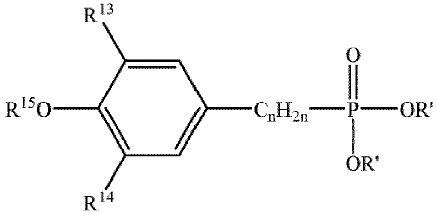 aufweist, wobei
R Wasserstoff, ein C₁-C₂₀-Alkyl, ein unsubstituiertes oder C₁-C₄-Alkyl-substituiertes Phenyl oder Naphthyl ist, R' Wasserstoff, ein C₁-C₂₀-Alkyl, ein unsubstituiertes oder C₁-C₄-Alkyl substituiertes Phenyl oder Naphthyl oder M₁^{r+}/r ist, n eine ganze Zahl von 0 bis 6 ist, M₁^{r+} ein r-valentes Metall-Ion oder Ammonium-Ion ist, r eine ganze Zahl von 1 bis 4 ist,
R¹³ ein Isopropyl, ein Isobutyl, ein tert-Butyl, ein Cyclohexyl oder ein Cycloalkyl ist, welche mit 1 bis 3 C₁-C₄-Alkylgruppen substituiert ist,
R¹⁴ Wasserstoff, ein C₁-C₄-Alkyl, ein Cycloalkyl oder ein Cyclohexyl ist, welche mit 1 bis 3 C₁-C₄-Alkylgruppen substituiert ist, und
R¹⁵ Wasserstoff, ein C₁-C₁₈-Alkyl, ein Trimethylsilyl, ein Benzyl, ein Phenyl oder ein Sulfonyl ist.

12. Zusammensetzung nach Anspruch 1,
wobei das Polyalkylenterephthalat ein Polybutylenterephthalat aufweist;
wobei der Schlagzähmodifizierer das thermoplastische Polyester-Elastomer aufweist, und wobei das thermoplastische Polyester-Elastomer ein Poly(butylenphthalat-co-alkylenether-phthalat) aufweist;
wobei das Flammschutzmittel Aluminium-tris(diethylphosphinat), Melaminpolyphosphat, Triphenylphosphanoxid und ein oligomeres Bis(phenoxy)phosphazen aufweist,
wobei die Zusammensetzung weiterhin ein Polyetherimid aufweist, und
wobei die Zusammensetzung
42 bis 52 Gewichtsprozent des Polyalkylenterephthalats,
3 bis 6 Prozent des Schlagzähmodifizierer s,
1,5 bis 4,5 Gewichtsprozent des Ethylen/1-Octen-Copolymers,
0,5 bis 3 Gewichtsprozent des Poly(butylenphthalat-co-alkylenether-phthalats),
25 bis 35 Gewichtsprozent der Glasfasern,
14 bis 21 Gewichtsprozent des Flammschutzmittels,
8 bis 12 Gewichtsprozent des Aluminium-tris(diethylphosphinats),
2 bis 6 Gewichtsprozent des Melaminpolyphosphats,
1 bis 4 Gewichtsprozent des Triphenylphosphanoxids und
0,5 bis 3 Gewichtsprozent des oligomeren Bis(phenoxy)phosphazens
aufweist.

13. Ein Gegenstand aufweisend eine Zusammensetzung, aufweisend:
35 bis 76 Gewichtsprozent eines Polyalkylenterephthalats,
2 bis 6 Prozent eines Schlagzähmodifizierer s, aufweisend ein Polyolefin-Elastomer, ein Ethylen/1-Octen-Copolymer und vorzugsweise ein thermoplastisches Polyester-Elastomer, unter der Voraussetzung, dass die Menge an Polyolefin-Elastomer 5 Gewichtsprozent nicht übersteigt;
10 bis 50 Gewichtsprozent Glasfasern; und
14 bis 25 Gewichtsprozent eines Flammschutzmittels aufweisend
5 bis 15 Gewichtsprozent eines Metalldialkylphosphinats,
2 bis 8 Gewichtsprozent eines Melamin-basierten Flammschutzmittels, und
1 bis 6 Gewichtsprozent eines Flammschutzmittel-Synergisten aufweisend ein organisches Phosphanoxid, ein oligomeres oder polymeres Bis(phenoxy)phosphazen, ein organischer Phosphorsäureester oder eine Kombination hiervon;
wobei alle Gewichtsprozentwerte auf dem Gesamtgewicht der Zusammensetzung basieren.

14. Gegenstand nach Anspruch 13,
wobei der Gegenstand eine Buchse für eine lichtemittierende Diode, ein Lüfterflügel, ein Lüftergehäuse oder ein Isolierbauteil eines elektrischen Steckverbinders ist.

15. Gegenstand nach Anspruch 13 oder 14,
wobei das Polyalkylenterephthalat ein Polybutylenterephthalat aufweist;
wobei der Schlagzähmodifizierer das thermoplastische Polyester-Elastomer aufweist, und wobei das thermoplastische Polyester-Elastomer ein Poly(butylenphthalat-co-alkylenether-phthalat) aufweist;
wobei das Flammschutzmittel Aluminium-tris(diethylphosphinat), Melaminpolyphosphat, Triphenylphosphanoxid und ein oligomeres Bis(phenoxy)phosphazen aufweist,
wobei die Zusammensetzung weiterhin ein Polyetherimid aufweist, und
wobei die Zusammensetzung
42 bis 52 Gewichtsprozent des Polyalkylenterephthalats,
3 bis 6 Prozent des Schlagzähmodifizierer s,
1,5 bis 4,5 Gewichtsprozent des Ethylen/1-Octen-Copolymers,
0,5 bis 3 Gewichtsprozent des Poly(butylenphthalat-co-alkylenether-phthalats),
25 bis 35 Gewichtsprozent der Glasfasern,
14 bis 21 Gewichtsprozent des Flammschutzmittels,
8 bis 12 Gewichtsprozent des Aluminium-tris(diethylphosphinats),
2 bis 6 Gewichtsprozent des Melaminpolyphosphats,
1 bis 4 Gewichtsprozent des Triphenylphosphanoxids und
0,5 bis 3 Gewichtsprozent des oligomeren Bis(phenoxy)phosphazens
aufweist.

## Revendications

1. Composition, comprenant :
de 35 à 76 % en poids de poly(téréphtalate d'alkylène) ;
de 2 à 6 % en poids d'un modificateur de résistance aux chocs comprenant un élastomère polyoléfinique comprenant un copolymère d'éthylène/1-octène, et, éventuellement un élastomère polyester thermoplastique, à condition que la quantité d'élastomère polyoléfinique n'excède pas 5 % en poids ;
de 10 à 50 % en poids de fibres de verre ; et
de 14 à 25 % en poids d'agent ignifuge comprenant
de 5 à 15 % en poids d'un dialkylphosphinate métallique,
de 2 à 8 % en poids d'un agent ignifuge à base de mélamine, et
de 1 à 6 % en poids d'un synergiste ignifuge comprenant un oxyde d'organophosphine, un bis(phénoxy)phosphazène oligomère ou polymère, un ester d'organophosphate, ou une combinaison de ceux-ci ;
dans laquelle toute les valeurs en pourcentages en poids sont basées sur le poids total de la composition.

2. Composition selon la revendication 1, dans laquelle le poly(téréphtalate d'alkylène) comprend un poly(téréphtalate de butylène).

3. Composition selon l'une quelconque des revendications 1 ou 2, dans laquelle le modificateur de résistance aux chocs comprend l'élastomère polyester thermoplastique, et dans laquelle l'élastomère polyester thermoplastique comprend un poly(iso-/téréphtalate d'alkylène)-*b*-poly(éther d'alkylène).

4. Composition selon la revendication 3, dans laquelle l'élastomère polyester thermoplastique comprend un poly(iso-/téréphtalate de butylène)-b-poly(éther de butylène).

5. Composition selon l'une quelconque des revendications 1 ou 2, dans laquelle le dialkylphosphinate métallique comprend un tris(diéthylphosphinate) d'aluminium.

6. Composition selon l'une quelconque des revendications 1 ou 2, dans laquelle l'agent ignifuge à base de mélamine comprend un phosphate de mélamine, un pyrophosphate de mélamine, un polyphosphate de mélamine, un cyanurate de mélamine, ou une combinaison de ceux-ci.

7. Composition selon l'une quelconque des revendications 1 ou 2, dans laquelle l'agent ignifuge à base de mélamine comprend un polyphosphate de mélamine.

8. Composition selon l'une quelconque des revendications 1 ou 2, dans laquelle le synergiste ignifuge comprend un oxyde de triphénylphosphine, un bis(phénoxy)phosphazène oligomère, ou une combinaison de ceux-ci.

9. Composition selon l'une quelconque des revendications 1 ou 2, dans laquelle le synergiste ignifuge comprend un oxyde de triphénylphosphine et un bis(phénoxy)phosphazène oligomère.

10. Composition selon l'une quelconque des revendications 1 ou 2, comprenant en outre de 0,5 à 3 % en poids d'un polyétherimide.

11. Composition selon l'une quelconque des revendications 1 ou 2, comprenant de 0 à 0,05 % en poids de phosphonates organiques de formule 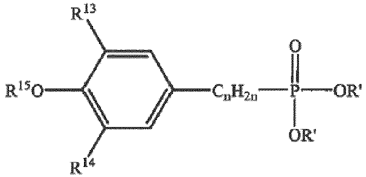 dans laquelle
R est un atome d'hydrogène, un alkyle C₁-C₂₀, un phényle ou naphtyle non substitué ou substitué par un alkyle C₁-C₄, R' est un atome d'hydrogène, un alkyle C₁-C₂₀, un phényle ou naphtyle non substitué ou substitué par un alkyle C₁-C₄ ou M₁^{r+}/r, n est un nombre entier de 0 à 6, M₁^{r+} est un ion métallique r-valent ou l'ion ammonium, r est un nombre entier de 0 à 4,
R¹³ est un isopropyle, isobutyle, tert-butyle, cyclohexyle ou est un cycloalkyle substitué par de 1 à 3 groupes alkyle C₁-C₄,
R¹⁴ est un atome d'hydrogène, un alkyle C₁-C₄, un cycloalkyle ou est un cyclohexyle substitué par de 1 à 3 groupes alkyle C₁-C₄, et
R¹⁵ est un atome d'hydrogène, un alkyle C₁-C₁₈, un triméthylsilyle, benzyle, phényle ou sulfonyle.

12. Composition selon la revendication 1,
dans laquelle le poly(téréphtalate d'alkylène) comprend un poly(téréphtalate de butylène) ;
dans laquelle le modificateur de résistance aux chocs comprend l'élastomère polyester thermoplastique, et l'élastomère polyester thermoplastique comprend un poly(phtalate de butylène-co-phtalate d'éther d'alkylène) ;
dans laquelle l'agent ignifuge comprend un tris(diéthylphosphinate) d'aluminium, un polyphosphate de mélamine, un oxyde de triphénylphosphine, et un bis(phénoxy)phosphazène oligomère ;
dans laquelle la composition comprend en outre un polyétherimide ; et
dans laquelle la composition comprend
de 42 à 52 % en poids de poly(téréphtalate d'alkylène),
de 3 à 6 % en poids de modificateur de résistance aux chocs,
de 1,5 à 4,5 % en poids de copolymère d'éthylène/1-octène,
de 0,5 à 3 % en poids de poly(phtalate de butylène-co-phtalate d'éther d'alkylène),
de 25 à 35 % en poids de fibres de verre,
de 14 à 21 % en poids d'agent ignifuge,
de 8 à 12 % en poids de tris(diéthylphosphinate) d'aluminium,
de 2 à 6 % en poids de polyphosphate de mélamine,
de 1 à 4 % en poids d'oxyde de triphénylphosphine, et
de 0,5 à 3 % en poids de bis(phénoxy)phosphazène oligomère.

13. Article comprenant une composition, comprenant :
de 35 à 76 % en poids de poly(téréphtalate d'alkylène) ;
de 2 à 6 % en poids d'un modificateur de résistance aux chocs comprenant un élastomère polyoléfinique comprenant un copolymère d'éthylène/1-octène, et, éventuellement un élastomère polyester thermoplastique, à condition que la quantité d'élastomère polyoléfinique n'excède pas 5 % en poids ;
de 10 à 50 % en poids de fibres de verre ; et
de 14 à 25 % en poids d'agent ignifuge comprenant
de 5 à 15 % en poids d'un dialkylphosphinate métallique,
de 2 à 8 % en poids d'un agent ignifuge à base de mélamine, et
de 1 à 6 % en poids de synergiste ignifuge comprenant un oxyde d'organophosphine, et un bis(phénoxy)phosphazène oligomère ou polymère, un ester d'organophosphate, ou une combinaison de ceux-ci ;
dans lequel toute les valeurs en pourcentages en poids sont basées sur le poids total de la composition.

14. Article selon la revendication 13, dans lequel l'article est une prise pour diode électroluminescente, une pale de ventilateur, un boîtier de ventilateur, ou une partie électriquement isolante de connecteur électrique.

15. Article selon la revendication 13 ou 14,
dans lequel le poly(téréphtalate d'alkylène) comprend un poly(téréphtalate de butylène) ;
dans lequel le modificateur de résistance aux chocs comprend l'élastomère polyester thermoplastique, et l'élastomère polyester thermoplastique comprend un poly(phtalate de butylène-co-phtalate d'éther d'alkylène) ;
dans lequel l'agent ignifuge comprend un tris(diéthylphosphinate) d'aluminium, un polyphosphate de mélamine, un oxyde de triphénylphosphine, et un bis(phénoxy)phosphazène oligomère ;
dans lequel la composition comprend en outre un polyétherimide ; et
dans lequel la composition comprend
de 42 à 52 % en poids de poly(téréphtalate d'alkylène) ;
de 3 à 6 % en poids de modificateur de résistance aux chocs,
de 1,5 à 4,5 % en poids de copolymère d'éthylène/1-octène,
de 0,5 à 3 % en poids de poly(phtalate de butylène-co-phtalate d'éther d'alkylène),
de 25 à 35 % en poids de fibres de verre,
de 14 à 21 % en poids d'agent ignifuge,
de 8 à 12 % en poids de tris(diéthylphosphinate) d'aluminium,
de 2 à 6 % en poids de polyphosphate de mélamine,
de 1 à 4 % en poids d'oxyde de triphénylphosphine, et
de 0,5 à 3 % en poids de bis(phénoxy)phosphazène oligomère.
